(19)

**Europäisches Patentamt**
**European Patent Office**
**Office européen des brevets**

(11) **EP 3 373 036 A1**

(12) **EUROPEAN PATENT APPLICATION**

(43) Date of publication:
**12.09.2018 Bulletin 2018/37**

(51) Int Cl.:
***G01S 13/90*** *(2006.01)*    ***G01S 7/40*** *(2006.01)*

(21) Application number: **18152075.0**

(22) Date of filing: **17.01.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD TN**

(30) Priority: **07.03.2017 CN 201710134065**

(71) Applicant: **Institute of Electronics, Chinese Academy of Sciences Beijing 100190 (CN)**

(72) Inventors:
• **Deng, Yunkai**
  **Beijing, 100190 (CN)**
• **Liu, Na**
  **Beijing, 100190 (CN)**
• **Wang, Yu**
  **Beijing, 100190 (CN)**
• **Zhao, Shuo**
  **Beijing, 100190 (CN)**
• **Wang, Xiangyu**
  **Beijing, 100190 (CN)**

(74) Representative: **Gulde & Partner Patent- und Rechtsanwaltskanzlei mbB Wallstraße 58/59 10179 Berlin (DE)**

(54) **AZIMUTH SIGNAL RECONSTRUCTION METHOD AND DEVICE FOR SYNTHETIC APERTURE RADAR**

(57)    An azimuth signal reconstruction method for a Synthetic Aperture Radar (SAR) is provided. A first Signal Noise Ratio (SNR) amplification factor of a first channel transfer function matrix is determined according to the first channel transfer function matrix, and an equivalent doppler bandwidth is determined according to the SNR amplification factor; a second channel transfer function matrix corresponding to each doppler frequency point is determined according to the equivalent doppler bandwidth and the first channel transfer function matrix; and a spectrum filter for extracting a doppler spectrum is determined according to the second channel transfer function matrix corresponding to each doppler frequency point, a premeasured aliasing spectrum and an original spectrum corresponding to the aliasing spectrum, the spectrum filter being configured to extract the doppler spectrum in an azimuth signal. An azimuth signal reconstruction device for the SAR is further provided.

**EP 3 373 036 A1**

Description

**TECHNICAL FIELD**

The disclosure relates to the Synthetic Aperture Radar (SAR) technology, and particularly to an azimuth signal reconstruction method and device for an SAR.

**BACKGROUND**

Multichannel technologies have very important applications in technologies of high-resolution wide-swath imaging of a space borne SAR, interference imaging, moving object detection and the like. An azimuth signal reconstruction technology for the SAR is one of key technologies of the multichannel technologies, and a method for azimuth signal reconstruction under the condition of nonuniform sampling is significant for SAR imaging.

At present, a classical azimuth signal reconstruction algorithm is based on the inverse of the channel transfer function matrix-based inversion, and this method may effectively reconstruct an azimuth signal under the condition that nonuniform sampling is not so serious. However, under a seriously nonuniform sampling condition, this method may cause a serious Signal Noise Ratio (SNR) loss and even a complete failure in the presence of data redundancy.

Therefore, an urgent problem to be solved is how to adapt for different levels of nonuniform sampling, effectively improve azimuth ambiguities and improve quality of a reconstructed azimuth signal.

**SUMMARY**

In view of this, embodiments of the disclosure are expected to provide an azimuth signal reconstruction method and device for an SAR, which may be adapted for different levels of nonuniform sampling of different degrees, effectively improve azimuth ambiguities and improve quality of a reconstructed azimuth signal.

To this end, the technical solutions of the disclosure are implemented as follows.

The embodiments of the disclosure provide an azimuth signal reconstruction method for an SAR, the method including that:

an SNR amplification factor of a first channel transfer function matrix is determined according to the first channel transfer function matrix, and an equivalent doppler bandwidth is determined according to the SNR amplification factor;
a second channel transfer function matrix corresponding to each doppler frequency point is determined according to the equivalent doppler bandwidth and the first channel transfer function matrix; and
a spectrum filter for extracting a doppler spectrum is determined according to the second channel transfer function matrix corresponding to each doppler frequency point, a premeasured aliasing spectrum and an original spectrum corresponding to the aliasing spectrum, the spectrum filter being configured to extract the doppler spectrum in an azimuth signal.

In the solution, the operation that the SNR amplification factor of the first channel transfer function matrix is determined according to the first channel transfer function matrix and the equivalent doppler bandwidth is determined according to the SNR amplification factor may include that:

a singular value of the first channel transfer function matrix is determined according to the first channel transfer function matrix, and the SNR amplification factor is determined according to the singular value;
an equivalent sampling interval is determined according to the SNR amplification factor, and a movement velocity of the SAR and the equivalent sampling interval are determined to be a preliminary recoverable bandwidth; and
a weighted average of the preliminary recoverable bandwidth and a full bandwidth of a pulse repetition frequency of the SAR is determined to be the equivalent doppler bandwidth according to a preset weight.

In the solution, an expression adopted for determining the equivalent sampling interval according to the SNR amplification factor may be:

$$d_{equ} = \frac{1}{\Phi_{bf}} \frac{1}{M} \frac{v_r}{PRF} + \frac{\Phi_{bf}-1}{\Phi_{bf}} \sum_{i=1}^{M} \frac{d_i^2}{v_r / PRF},$$

where $d_{equ}$ may represent the equivalent sampling interval, $\Phi_{bf}$ may represent the SNR amplification factor, $M$ may represent a channel number of the SAR, *PRF* may represent the pulse repetition frequency of the SAR, $v_r$ may represent the movement velocity of the SAR, and $d_i$ may represent a sampling interval of each channel.

In the solution, the operation that the second channel transfer function matrix corresponding to each doppler frequency point is determined according to the equivalent doppler bandwidth and the first channel transfer function matrix may include that:

a sum of a product of a natural number and the pulse repetition frequency and a frequency of each doppler frequency point is compared with a preset range; and

each column corresponding to each natural number meeting the preset range in the first channel transfer function matrix is determined to form the second channel transfer function matrix corresponding to the doppler frequency points.

In the solution, meeting the preset range may include:

being larger than a negative half of the equivalent doppler bandwidth and being smaller than a half of the equivalent doppler bandwidth.

In the solution, the operation that the spectrum filter is determined according to the second channel transfer function matrix corresponding to each doppler frequency point, the premeasured aliasing spectrum and the original spectrum corresponding to the aliasing spectrum may include that:

a cost function is established to make a result obtained through filtering the premeasured aliasing spectrum by the spectrum filter approximate to the original spectrum corresponding to the premeasured aliasing spectrum under a minimum mean square error criterion;

only columns with the same numerical values as columns of the second channel transfer function matrix corresponding to the doppler frequency points are extracted from the aliasing spectrum; and

only columns with the same numerical values as columns of the second channel transfer function matrix corresponding to the doppler frequency points are extracted from the original spectrum.

The embodiments of the disclosure further provide an azimuth signal reconstruction device for an SAR, the device including a first determination module, a screening module and a second determination module, wherein

the first determination module may be configured to determine an SNR amplification factor of a first channel transfer function matrix according to the first channel transfer function matrix, and determine an equivalent doppler bandwidth according to the SNR amplification factor;

the screening module may be configured to determine a second channel transfer function matrix corresponding to each doppler frequency point according to the equivalent doppler bandwidth and the first channel transfer function matrix; and

the second determination module may be configured to determine a spectrum filter for extracting a doppler spectrum according to the second channel transfer function matrix corresponding to each doppler frequency point, a premeasured aliasing spectrum and an original spectrum corresponding to the aliasing spectrum, the spectrum filter being configured to extract the doppler spectrum in an azimuth signal.

In the solution, the first determination module may specifically be configured to:

determine a singular value of the first channel transfer function matrix according to the first channel transfer function matrix, and determine the SNR amplification factor according to the singular value;

determine an equivalent sampling interval according to the SNR amplification factor, and determine a movement velocity of the SAR and the equivalent sampling interval to be a preliminary recoverable bandwidth; and

determine a weighted average of the preliminary recoverable bandwidth and a full bandwidth of a pulse repetition frequency of the SAR to be the equivalent doppler bandwidth according to a preset weight.

In the solution, an expression adopted for determining the equivalent sampling interval by the first determination module may be:

$$d_{equ} = \frac{1}{\Phi_{bf}} \frac{1}{M} \frac{v_r}{PRF} + \frac{\Phi_{bf} - 1}{\Phi_{bf}} \sum_{i=1}^{M} \frac{d_i^2}{v_r / PRF} ,$$

where $d_{equ}$ may represent the equivalent sampling interval, $\Phi_{bf}$ may represent the SNR amplification factor, $M$ may represent a channel number of the SAR, $PRF$ may represent the pulse repetition frequency of the SAR, $v_r$ may represent the movement velocity of the SAR, and $d_i$ may represent a sampling interval of each channel.

In the solution, the screening module may specifically be configured to:

compare a sum of a product of a natural number and the pulse repetition frequency and a frequency of each the doppler frequency point with a preset range; and
determine each column corresponding to each natural number meeting the preset range in the first channel transfer function matrix to form the second channel transfer function matrix corresponding to each doppler frequency point.

In the solution, the screening module may specifically be configured to:

determine the sum of the product of the natural number and the pulse repetition frequency and the frequency of each doppler frequency point to be larger than a negative half of the equivalent doppler bandwidth and smaller than a half of the equivalent doppler bandwidth.

In the solution, the second determination module may specifically be configured to:

establish a cost function to make a result obtained through filtering the premeasured aliasing spectrum by the spectrum filter approximate to the original spectrum corresponding to the premeasured aliasing spectrum under a minimum mean square error criterion;
only extract columns with the same numerical values as columns of the second channel transfer function matrix corresponding to the doppler frequency points from the aliasing spectrum; and
only extract columns with the same numerical values as columns of the second channel transfer function matrix corresponding to the doppler frequency points from the original spectrum.

According to the azimuth signal reconstruction method and device provided by the embodiments of the disclosure for the SAR, the SNR amplification factor of the first channel transfer function matrix is determined according to the first channel transfer function matrix, and the equivalent doppler bandwidth is determined according to the SNR amplification factor; the second channel transfer function matrix corresponding to each doppler frequency point is determined according to the equivalent doppler bandwidth and the first channel transfer function matrix; and the spectrum filter for extracting the doppler spectrum is determined according to the second channel transfer function matrix corresponding to each doppler frequency point, the premeasured aliasing spectrum and the original spectrum corresponding to the aliasing spectrum, the spectrum filter being configured to extract the doppler spectrum in the azimuth signal. In such a manner, a new equivalent doppler bandwidth is calculated, such that a new channel transfer function matrix is determined, thereby screening relatively small singular values of an original channel transfer function matrix and improving an SNR under a serious nonuniform sampling condition. This solution can effectively improve the azimuth ambiguity and quality of a reconstructed azimuth signal, and can be applied for different degrees of nonuniform sampling.

**BRIEF DESCRIPTION OF DRAWINGS**

FIG. 1 is a flowchart of an azimuth signal reconstruction method for an SAR according to an embodiment of the disclosure.
FIG. 2 is a schematic diagram of azimuth multichannel SAR equivalent sampling according to an embodiment of the disclosure.
FIG. 3 is a flowchart of specific steps according to an embodiment of the disclosure.
FIG. 4 is a schematic diagram of comparing images constructed by adopting an original reconstruction method and a new reconstruction method according to an embodiment of the disclosure.
FIG. 5 is a structure diagram of an azimuth signal reconstruction device for an SAR according to an embodiment of the disclosure.

**DETAILED DESCRIPTION**

In the embodiments of the disclosure, an SNR amplification factor of a first channel transfer function matrix is determined according to the first channel transfer function matrix, and an equivalent doppler bandwidth is determined according to the SNR amplification factor; a second channel transfer function matrix corresponding to each doppler frequency point is determined according to the equivalent doppler bandwidth and the first channel transfer function matrix; and a spectrum filter for extracting a doppler spectrum is determined according to the second channel transfer function matrix corresponding to each doppler frequency point, a premeasured aliasing spectrum and an original spectrum corresponding to the aliasing spectrum, the spectrum filter being configured to extract the doppler spectrum in an azimuth signal.

The disclosure will be further described below in combination with embodiments in detail.

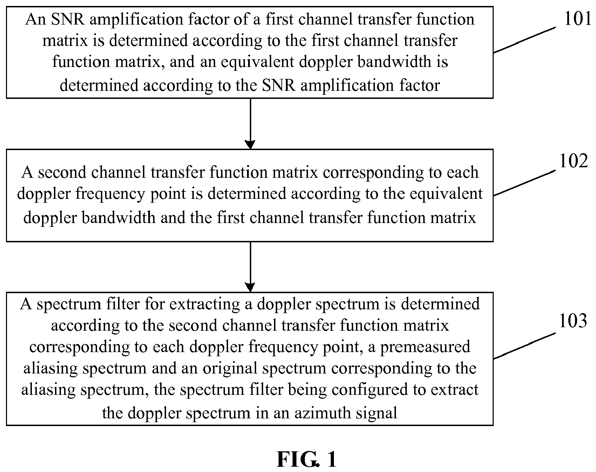

As illustrated in FIG. 1, an azimuth signal reconstruction method provided by the embodiments of the disclosure for an SAR includes the following steps.

In Step 101, an SNR amplification factor of a first channel transfer function matrix is determined according to the first channel transfer function matrix, and an equivalent doppler bandwidth is determined according to the SNR amplification factor.

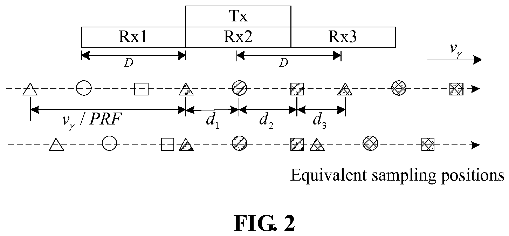

Here, the first channel transfer function matrix may be an original channel transfer function matrix adopted in the classical azimuth signal reconstruction algorithm. FIG. 2 shows a schematic diagram of azimuth multichannel SAR sampling. The first channel transfer function matrix H may be obtained according to a relationship between a transmitted signal and a received signal of each channel, and represented as an expression (1):

$$\mathbf{H}(f_d) = \begin{pmatrix} H_1(f_d) & \mathrm{L} & H_1(f_d + (M-1)\cdot PRF) \\ \mathrm{M} & \mathrm{L} & \mathrm{M} \\ H_M(f_d) & \mathrm{L} & H_M(f_d + (M-1)\cdot PRF) \end{pmatrix} (1),$$

where an element of the ith row and the kth column may be represented as an expression (2):

$$H_i(f_d + (k-1)\cdot PRF) = \exp\{-\mathrm{j}2\pi \frac{\Delta x_k}{2v_r}(f_d + (k-1)PRF)\} (2),$$

where $f_d$ represents a doppler frequency, $\Delta x_k = (M-1)/2 \cdot D$, M represents a number of receiving channels, $v_r$ represents a velocity of a radar platform, Tx represents a transmitting channel, Rx represents a receiving channel, $i$ represents a row number, $k$ represents a column number, $j$ represents a virtual unit, i.e., a square root of -1; for example, there are 3 channels in FIG. 2 and M=3; $PRF$ represents a pulse repetition frequency of the radar, and D represents a sub-aperture length of the SAR.

Herein, a corresponding SNR amplification factor $\Phi_{bf}$ may be calculated according to the first channel transfer function matrix, a preliminary recoverable bandwidth is accordingly calculated, and a required equivalent doppler bandwidth may be obtained by averaging $PRF_{equ}$ and a full bandwidth $M \cdot PRF$. Here, $M$ is the channel number, and $PRF$ is a system pulse repetition frequency of the SAR.

Specifically, for the first channel transfer function matrix $H(f_d)$, a singular value $\sigma_1 \geq \sigma_2 \geq \mathrm{L}\ \sigma_M$ of the channel transfer function matrix may be calculated at first, and the SNR amplification factor $\Phi_{bf}$ is calculated according to an expression (3):

$$\Phi_{bf} = \frac{1}{\sigma_1^2} + \frac{1}{\sigma_2^2} + \mathrm{L} + \frac{1}{\sigma_M^2} \quad (3)$$

The SNR amplification factor is calculated according to the first channel transfer function matrix, and an equivalent azimuth sampling interval is calculated according to the SNR amplification factor at first, and a new equivalent sampling interval $d_{equ}$ may be calculated by adopting an expression (4) according to the SNR amplification factor $\Phi_{bf}$ and an original echo azimuth sampling interval $d_i$ of each channel:

$$d_{equ} = \frac{1}{\Phi_{bf}} \frac{1}{M} \frac{v_r}{PRF} + \frac{\Phi_{bf}-1}{\Phi_{bf}} \sum_{i=1}^{M} \frac{d_i^2}{v_r / PRF} \quad (4),$$

where $d_{equ}$ represents the equivalent sampling interval, $\Phi_{bf}$ represents the SNR amplification factor, $M$ represents the channel number of the SAR, $PRF$ represents the pulse repetition frequency of the SAR, $v_r$ represents a movement velocity of the SAR, and $d_i$ represents a sampling interval of each channel.

The preliminary recoverable bandwidth may be calculated according to the equivalent sampling interval, and a calculation method may be represented by an expression (5):

$$PRF_{equ} = \frac{v_r}{d_{equ}} \quad (5)$$

After the preliminary recoverable bandwidth is acquired, weighted average may be performed on the preliminary recoverable bandwidth and the full bandwidth $M \cdot PRF$ according to preset weights to obtain the equivalent doppler bandwidth $PRF_{wequ}$ required in the embodiment of the disclosure. Here, a weighted value of the preliminary recoverable bandwidth and the full bandwidth $M \cdot PRF$ may be determined according to past experimental data or empirical value. For example, a weight of the preliminary recoverable bandwidth is 1/2, and a value of $M \cdot PRF$ may be 8000Hz.

In Step 102, a second channel transfer function matrix corresponding to each doppler frequency point is determined according to the equivalent doppler bandwidth and the first channel transfer function matrix.

Here, a column corresponding to each frequency point meeting a preset condition may be screened from the first channel transfer function matrix according to the equivalent doppler bandwidth $PRF_{wequ}$, and each column is established as the second channel transfer function matrix corresponding to each frequency point.

Specifically, for each doppler frequency $f_d$ belonging to the first channel transfer function matrix, the doppler frequency may be filtered by virtue of the preset condition, and the filter condition may be represented as an expression (6):

$$-\frac{PRF_{wequ}}{2} < f_d + kPRF < \frac{PRF_{wequ}}{2} \quad (6)$$

A column, corresponding to k meeting the condition, of the first channel transfer function matrix is selected into a new channel transfer function, and then a corresponding new channel transfer function matrix is obtained for each frequency point.

For example, for a doppler frequency $f_d$ in the first channel transfer function matrix represented by the expression (1), if $k$ = 1,3,5,7,9, the doppler frequency $f_d$ may meet the expression (6), and then columns 1, 3, 5, 7 and 9 in the first channel transfer function matrix are determined to form the new channel transfer function matrix corresponding to the doppler frequency $f_d$.

In Step 103, a spectrum filter for extracting a doppler spectrum is determined according to the second channel transfer function matrix corresponding to each doppler frequency point, a premeasured aliasing spectrum and an original spectrum corresponding to the aliasing spectrum, the spectrum filter being configured to extract the doppler spectrum in an azimuth signal.

Here, a cost function may be established to construct the spectrum filter, such that under a minimum mean square error criterion, the premeasured aliasing spectrum filtered by the spectrum filter approximates to the original spectrum corresponding to the premeasured aliasing spectrum under a minimum mean square error criterion. Only columns with the same numerical values as columns of the second channel transfer function matrix corresponding to the doppler frequency points are extracted from the aliasing spectrum; and only columns with the same numerical values as columns of the second channel transfer function matrix corresponding to the doppler frequency points are extracted from the original spectrum.

Specifically, the spectrum filter $v_k(f_d)$ is determined according to the obtained second channel transfer function matrix, such that the aliasing spectrum processed by the spectrum filter well approximates to the original spectrum under the minimum mean square error criterion, and its corresponding cost function $F_M$ may be represented as an expression (7):

$$F_M = \grave{o}\left\{ \int_{-PRF/2}^{PRF/2} \sum_{k \in \Omega_{f_d}^{scrn}} |v_k^H(f_d)X(f_d) - U_k(f_d)|^2 \, df_d \right\} \quad (7),$$

where $X(f_d)$ represents the observed aliasing spectrum, $U(f_d)$ is the original spectrum corresponding to the aliasing spectrum, and $k$ represents a column number of the second channel transfer function matrix corresponding to the doppler frequency $f_d$, i.e. a value selected in Step 102. Here, a solution making the cost function $F_M$ optimal is the required spectrum filter. The spectrum filter may be adopted to extract an original spectrum of an azimuth signal. After the step is completed, it is indicated that reconstruction of the azimuth signal has been completed.

The disclosure will be further described below in combination with a specific embodiment 1 in detail.

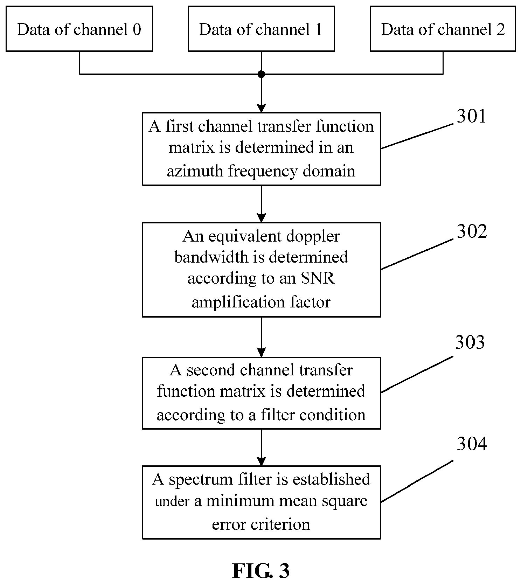

Here, an azimuth signal reconstruction method for an SAR, as shown in FIG. 3, specifically includes the following steps.

In Step 301, a first channel transfer function matrix is determined in an azimuth frequency domain in combination with data of each channel. In the embodiment, it is assumed that the system has three receiving channels, data azimuth of each channel is transformed to the azimuth frequency domain by using an Fast Fourier Transform (FFT) to determine a channel transfer function matrix.

In Step 302, a corresponding SNR amplification factor is determined according to the determined first channel transfer function matrix, and a corresponding equivalent doppler bandwidth is accordingly determined.

In Step 303, a second channel transfer function matrix is determined according to a filter condition

$$-\frac{PRF_{wequ}}{2} < f_d + kPRF < \frac{PRF_{wequ}}{2}.$$

In Step 304, a spectrum filter of each channel is established and obtained under a minimum mean square error criterion on the basis of the second channel transfer function matrix.

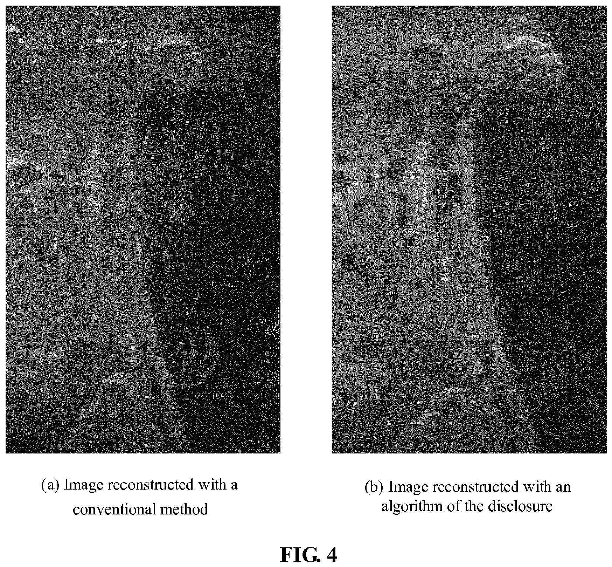

FIG. 4(a) is an imaging result after reconstruction with a conventional method, and FIG. 4(b) is an imaging result through reconstructing azimuth signals with the spectrum filter established by the method of the embodiment of the disclosure. The spectrum filter established by the method of the embodiment of the disclosure may effectively improve an SNR and an azimuth ambiguity.

From the above description, it can be seen that the method of the embodiment of the disclosure may effectively complete azimuth signal reconstruction under the serious nonuniformity.

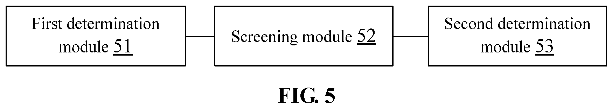

An azimuth signal reconstruction device provided by an embodiment of the disclosure for an SAR, as shown in FIG. 5, includes a first determination module 51, a screening module 52 and a second determination module 53.

The first determination module 51 is configured to determine an SNR amplification factor of a first channel transfer function matrix according to the first channel transfer function matrix, and determine an equivalent doppler bandwidth according to the SNR amplification factor.

Here, the first channel transfer function matrix may be an original channel transfer function matrix adopted in the classical azimuth signal reconstruction algorithm. FIG. 2 shows a schematic diagram of azimuth multichannel SAR sampling. The first channel transfer function matrix H may be obtained according to a relationship between a transmitted signal and a received signal of each channel, and represented as an expression (1), where an element of the ith row and the kth column may be represented as an expression (2), where $f_d$ represents a doppler frequency, $\Delta x_k = (M-1)/2 \cdot D$, M represents a number of receiving channels, $v_r$ represents a velocity of a radar platform, Tx represents a transmitting channel, Rx represents a receiving channel, $i$ represents a row number, $k$ represents a column number, $j$ represents a virtual unit, i.e., a square root of -1; for example, there are 3 channels in FIG. 2 and M=3; $PRF$ represents a pulse repetition frequency of the radar, and D represents a sub-aperture length of the SAR.

Herein, a corresponding SNR amplification factor $\Phi_{bf}$ may be calculated according to the first channel transfer function matrix, a preliminary recoverable bandwidth is accordingly calculated, and a required equivalent doppler bandwidth may be obtained by averaging $PRF_{equ}$ and a full bandwidth $M \cdot PRF$. Here, $M$ is the channel number, and $PRF$ is a system pulse repetition frequency of the SAR.

Specifically, for the first channel transfer function matrix $H(f_d)$, a singular value $\sigma_1 \geq \sigma_2 \geq L \; \sigma_M$ of the channel transfer function matrix may be calculated at first, and the SNR amplification factor $\Phi_{bf}$ is calculated according to an expression (3).

The SNR amplification factor is calculated according to the first channel transfer function matrix, and an equivalent azimuth sampling interval is calculated according to the SNR amplification factor at first, and a new equivalent sampling interval $d_{equ}$ may be calculated by adopting an expression (4) according to the SNR amplification factor $\Phi_{bf}$ and an original echo azimuth sampling interval $d_i$ of each channel, where $d_{equ}$ represents the equivalent sampling interval,

$\Phi_{bf}$ represents the SNR amplification factor, $M$ represents the channel number of the SAR, $PRF$ represents the pulse repetition frequency of the SAR, $v_r$ represents a movement velocity of the SAR, and $d_i$ represents a sampling interval of each channel.

The preliminary recoverable bandwidth may be calculated according to the equivalent sampling interval, and a calculation method may be represented by an expression (5). After the preliminary recoverable bandwidth is acquired, weighted average may be performed on the preliminary recoverable bandwidth and the full bandwidth $M \cdot PRF$ according to a preset weight to obtain the equivalent doppler bandwidth $PRF_{wequ}$ required in the embodiment of the disclosure. Here, a weighted value of the preliminary recoverable bandwidth and the full bandwidth $M \cdot PRF$ may be determined according to past experimental data or empirical value. For example, a weight of the preliminary recoverable bandwidth is 1/2, and a value of $M \cdot PRF$ may be 8000Hz.

The screening module 52 is configured to determine a second channel transfer function matrix corresponding to each doppler frequency point according to the equivalent doppler bandwidth and the first channel transfer function matrix.

Here, a column corresponding to each frequency point meeting a preset condition may be screened from the first channel transfer function matrix according to the equivalent doppler bandwidth $PRF_{wequ}$, and each column is established as the second channel transfer function matrix corresponding to each frequency point.

Specifically, for each doppler frequency $f_d$ belonging to the first channel transfer function matrix, the doppler frequency may be filtered by virtue of the preset condition, and the filter condition may be represented as an expression (6).

A column, corresponding to k meeting the condition, of the first channel transfer function matrix is selected into a new channel transfer function, and then a corresponding new channel transfer function matrix is obtained for each frequency point.

For example, for a doppler frequency $f_d$ in the first channel transfer function matrix represented by the expression (1), if $k = 1,3,5,7,9$, the doppler frequency $f_d$ may meet the expression (6), and then columns 1, 3, 5, 7 and 9 in the first channel transfer function matrix are determined to form the new channel transfer function matrix corresponding to the doppler frequency $f_d$.

The second determination module 53 is configured to determine a spectrum filter for extracting a doppler spectrum according to the second channel transfer function matrix corresponding to each doppler frequency point, a premeasured aliasing spectrum and an original spectrum corresponding to the aliasing spectrum, the spectrum filter being configured to extract the doppler spectrum in an azimuth signal.

Here, a cost function may be established to construct the spectrum filter, such that under a minimum mean square error criterion, the premeasured aliasing spectrum filtered by the spectrum filter approximates to the original spectrum corresponding to the premeasured aliasing spectrum. Only columns with the same numerical values as columns of the second channel transfer function matrix corresponding to the doppler frequency points are extracted from the aliasing spectrum; and only columns with the same numerical values as columns of the second channel transfer function matrix corresponding to the doppler frequency points are extracted from the original spectrum.

Specifically, the spectrum filter $v_k(f_d)$ is determined according to the obtained second channel transfer function matrix, such that the aliasing spectrum processed by the spectrum filter well approximates to the original spectrum under the minimum mean square error criterion, and its corresponding cost function $F_M$ may be represented as an expression (7), where $X(f_d)$ represents the observed aliasing spectrum, $U(f_d)$ is the original spectrum corresponding to the aliasing spectrum, and $k$ represents a column number of the second channel transfer function matrix corresponding to the doppler frequency $f_d$, i.e. a value screened in Step 102. Here, a solution making the cost function $F_M$ optimal is the required spectrum filter. The spectrum filter may be adopted to extract an original spectrum of an azimuth signal. After the step is completed, it is indicated that reconstruction of the azimuth signal has been completed.

During a practical application, all of the first determination module 51, the screening module 52 and the second determination module 53 may be implemented as a Central Processing Unit (CPU), Micro Processing Unit (MPU), Digital Signal Processor (DSP) or Field Programmable Gate Array (FPGA) of an SAR device.

The above is only the preferred embodiment of the disclosure and not intended to limit the scope of protection of the disclosure. Any modifications, equivalent replacements, improvements and the like made within the spirit and principle of the disclosure shall fall within the scope of protection of the disclosure.

**Claims**

1. An azimuth signal reconstruction method for a Synthetic Aperture Radar, SAR, comprising:

   determining (101) a Signal Noise Ratio, SNR, amplification factor of a first channel transfer function matrix according to the first channel transfer function matrix, and determining an equivalent doppler bandwidth according to the SNR amplification factor;

determining (102) a second channel transfer function matrix corresponding to each doppler frequency point according to the equivalent doppler bandwidth and the first channel transfer function matrix; and

determining (103) a spectrum filter for extracting a doppler spectrum according to the second channel transfer function matrix corresponding to each doppler frequency point, a premeasured aliasing spectrum and an original spectrum corresponding to the aliasing spectrum, the spectrum filter being configured to extract the doppler spectrum in an azimuth signal.

2. The method according to claim 1, wherein determining (101) the SNR amplification factor of the first channel transfer function matrix according to the first channel transfer function matrix and determining the equivalent doppler bandwidth according to the SNR amplification factor comprises:

determining a singular value of the first channel transfer function matrix according to the first channel transfer function matrix, and determining the SNR amplification factor according to the singular value;

determining an equivalent sampling interval according to the SNR amplification factor, and determining a movement velocity of the SAR and the equivalent sampling interval to be a preliminary recoverable bandwidth; and determining a weighted average of the preliminary recoverable bandwidth and a full bandwidth of a pulse repetition frequency of the SAR to be the equivalent doppler bandwidth according to a preset weight.

3. The method according to claim 2, wherein an expression for determining the equivalent sampling interval according to the SNR amplification factor is:

$$d_{equ} = \frac{1}{\Phi_{bf}} \frac{1}{M} \frac{v_r}{PRF} + \frac{\Phi_{bf}-1}{\Phi_{bf}} \sum_{i=1}^{M} \frac{d_i^2}{v_r / PRF},$$

where $d_{equ}$ represents the equivalent sampling interval, $\Phi_{bf}$ represents the SNR amplification factor, $M$ represents a channel number of the SAR, $PRF$ represents the pulse repetition frequency of the SAR, $v_r$ represents the movement velocity of the SAR, and $d_i$ represents a sampling interval of each channel.

4. The method according to claim 1, wherein determining (102) the second channel transfer function matrix corresponding to each doppler frequency point according to the equivalent doppler bandwidth and the first channel transfer function matrix comprises:

comparing a sum of a product of a natural number and a pulse repetition frequency and a frequency of each doppler frequency point with a preset range; and

determining each column corresponding to each natural number meeting the preset range in the first channel transfer function matrix to form the second channel transfer function matrix corresponding to each doppler frequency point.

5. The method according to claim 4, wherein meeting the preset range comprises:

being larger than a negative half of the equivalent doppler bandwidth and smaller than a half of the equivalent doppler bandwidth.

6. The method according to claim 4 or 5, wherein determining (103) the spectrum filter according to the second channel transfer function matrix corresponding to each doppler frequency point, the premeasured aliasing spectrum and the original spectrum corresponding to the aliasing spectrum comprises:

establishing a cost function to make a result obtained through filtering the premeasured aliasing spectrum by the spectrum filter approximate to the original spectrum corresponding to the premeasured aliasing spectrum under a minimum mean square error criterion;

only extracting columns with the same numerical values as columns of the second channel transfer function matrix corresponding to the doppler frequency points from the aliasing spectrum; and

only extracting columns with the same numerical values as columns of the second channel transfer function matrix corresponding to the doppler frequency points from the original spectrum.

7. An azimuth signal reconstruction device for a Synthetic Aperture Radar, SAR, comprising: a first determination module (51), a screening module (52) and a second determination module (53), wherein

the first determination module (51) is configured to determine a Signal Noise Ratio, SNR, amplification factor of a first channel transfer function matrix according to the first channel transfer function matrix, and determine an equivalent doppler bandwidth according to the SNR amplification factor;

the screening module (52) is configured to determine a second channel transfer function matrix corresponding to each doppler frequency point according to the equivalent doppler bandwidth and the first channel transfer function matrix; and

the second determination module (53) is configured to determine a spectrum filter for extracting a doppler spectrum according to the second channel transfer function matrix corresponding to each doppler frequency point, a premeasured aliasing spectrum and an original spectrum corresponding to the aliasing spectrum, the spectrum filter being configured to extract the doppler spectrum in an azimuth signal.

8.  The device according to claim 7, wherein the first determination module (51) is specifically configured to:

determine a singular value of the first channel transfer function matrix according to the first channel transfer function matrix, and determine the SNR amplification factor according to the singular value;

determine an equivalent sampling interval according to the SNR amplification factor, and determine a movement velocity of the SAR and the equivalent sampling interval to be a preliminary recoverable bandwidth; and

determine a weighted average of the preliminary recoverable bandwidth and a full bandwidth of a pulse repetition frequency of the SAR to be the equivalent doppler bandwidth according to a preset weight.

9.  The device according to claim 8, wherein an expression for determining the equivalent sampling interval by the first determination module (51) is:

$$ d_{equ} = \frac{1}{\Phi_{bf}} \frac{1}{M} \frac{v_r}{PRF} + \frac{\Phi_{bf}-1}{\Phi_{bf}} \sum_{i=1}^{M} \frac{d_i^2}{v_r / PRF} , $$

where $d_{equ}$ represents the equivalent sampling interval, $\Phi_{bf}$ represents the SNR amplification factor, $M$ represents a channel number of the SAR, $PRF$ represents the pulse repetition frequency of the SAR, $v_r$ represents the movement velocity of the SAR, and $d_i$ represents a sampling interval of each channel.

10. The device according to claim 7, wherein the screening module (52) is specifically configured to:

compare a sum of a product of a natural number and a pulse repetition frequency and a frequency of each doppler frequency point with a preset range; and

determine each column corresponding to each natural number meeting the preset range in the first channel transfer function matrix to form the second channel transfer function matrix corresponding to each doppler frequency point.

11. The device according to claim 10, wherein the screening module (52) is specifically configured to:

determine the sum of the product of the natural number and the pulse repetition frequency and the frequency of each doppler frequency point to be larger than a negative half of the equivalent doppler bandwidth and smaller than a half of the equivalent doppler bandwidth.

12. The device according to claim 10 or 11, wherein the second determination module (53) is specifically configured to:

establish a cost function to make a result obtained through filtering the premeasured aliasing spectrum by the spectrum filter approximate to the original spectrum corresponding to the premeasured aliasing spectrum under a minimum mean square error criterion;

only extract columns with the same numerical values as columns of the second channel transfer function matrix corresponding to the doppler frequency points from the aliasing spectrum; and

only extract columns with the same numerical values as columns of the second channel transfer function matrix corresponding to the doppler frequency points from the original spectrum.

An SNR amplification factor of a first channel transfer function matrix is determined according to the first channel transfer function matrix, and an equivalent doppler bandwidth is determined according to the SNR amplification factor

101

A second channel transfer function matrix corresponding to each doppler frequency point is determined according to the equivalent doppler bandwidth and the first channel transfer function matrix

102

A spectrum filter for extracting a doppler spectrum is determined according to the second channel transfer function matrix corresponding to each doppler frequency point, a premeasured aliasing spectrum and an original spectrum corresponding to the aliasing spectrum, the spectrum filter being configured to extract the doppler spectrum in an azimuth signal

103

**FIG. 1**

FIG. 2

| Data of channel 0 | Data of channel 1 | Data of channel 2 |
|---|---|---|

A first channel transfer function matrix is determined in an azimuth frequency domain — 301

An equivalent doppler bandwidth is determined according to an SNR amplification factor — 302

A second channel transfer function matrix is determined according to a filter condition — 303

A spectrum filter is established under a minimum mean square error criterion — 304

**FIG. 3**

(a) Image reconstructed with a
conventional method

(b) Image reconstructed with an
algorithm of the disclosure

**FIG. 4**

| First determination module 51 | Screening module 52 | Second determination module 53 |

**FIG. 5**

Europäisches
Patentamt

European
Patent Office

Office européen
des brevets

# EUROPEAN SEARCH REPORT

**Application Number**

EP 18 15 2075

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | NA LIU ET AL: "Modified Multichannel Reconstruction Method of SAR With Highly Nonuniform Spatial Sampling", IEEE JOURNAL OF SELECTED TOPICS IN APPLIED EARTH OBSERVATIONS AND REMOTE SENSING, vol. 10, no. 2, 17 January 2017 (2017-01-17), pages 617-627, XP055490100, USA ISSN: 1939-1404, DOI: 10.1109/JSTARS.2016.2630048 * the whole document * | 1-12 | INV. G01S13/90 G01S7/40 |

-----

|  |  |
|---|---|
|  | TECHNICAL FIELDS SEARCHED (IPC) |
|  | G01S |

The present search report has been drawn up for all claims

| Place of search | Date of completion of the search | Examiner |
|---|---|---|
| Munich | 4 July 2018 | Rudolf, Hans |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)